# FASCICULE DE BREVET EUROPEEN

(11) **EP 3 412 123 B1**
(45) Date de publication et mention de la délivrance du brevet: **05.08.2020**
(21) Numéro de dépôt: 18175529.9
(22) Date de dépôt: 01.06.2018
(51) Int. Cl.: A01B 13/06, A01B 39/16, A01B 69/00

(54) **PROCÉDÉ DE PILOTAGE D'UN SUPPORT D'OUTIL ÉQUIPÉ D'UN SYSTÈME D'ÉVITEMENT D'OBSTACLES ET SUPPORT D'OUTIL CONFIGURÉ POUR LA MISE EN OEUVRE DU PROCÉDÉ**
VERFAHREN ZUR STEUERUNG EINES WERKZEUGTRÄGERS, DER MIT EINEM HINDERNISVERMEIDUNGSSYSTEM AUSGESTATTET IST, UND WERKZEUGTRÄGER, DER FÜR DIE UMSETZUNG DIESES VERFAHRENS KONFIGURIERT IST
METHOD FOR CONTROLLING A TOOL MOUNTING PROVIDED WITH A SYSTEM FOR AVOIDING OBSTACLES, AND TOOL MOUNTING CONFIGURED TO CARRY OUT THE METHOD

(30) Priorité: 06.06.2017 FR 1755004
(43) Date de publication de la demande: 12.12.2018
(73) Titulaire: Ferrand, 11620 Villmoustaussou (FR)
(72) Inventeur: TROUVEL, Serge, 66000 Perpignan (FR)
(74) Mandataire: Fantin, Laurent

(56) Documents cités:
- EP-A1- 2 062 472
- FR-A1- 2 290 828
- FR-A1- 2 727 276
- FR-A1- 2 830 165

## Description

La présente demande se rapporte à un procédé de pilotage d'un support d'outil équipé d'un système d'évitement d'obstacles ainsi qu'à un support d'outil configuré pour la mise en œuvre du procédé.

Le document FR-1.362.750 décrit une décavaillonneuse à commandes pneumatiques comprenant un parallélogramme déformable constitué d'un support, deux longerons et une traverse. Le support présente une attache trois-points pour le relier à un tracteur ou à tout autre engin motorisé et la traverse supporte un outil tel qu'un soc.

Cette décavaillonneuse est plus particulièrement adaptée pour travailler le sol au niveau d'un rang de vigne en évitant les pieds de vigne. A cet effet, la décavaillonneuse comprend un système d'évitement d'obstacles comportant un actionneur qui relie le support et le premier longeron, un ressort de rappel qui relie les deux longerons au niveau de deux angles opposés du parallélogramme, un palpeur supporté par la traverse et configuré pour prendre appui contre un pied et pivoter ainsi qu'un capteur configuré pour détecter le pivotement du palpeur et commander l'actionneur en fonction du pivotement du palpeur. En complément, la décavaillonneuse comprend une butée pour limiter la course de déformation du parallélogramme.

D'autres supports d'outil équipés d'un système d'évitement d'obstacles reposant sur ce principe de fonctionnement sont également proposés dans les documents EP-2.062.472 et FR-2.290.828.

Ces supports d'outil ne sont pas pleinement satisfaisants car le conducteur du tracteur doit ajuster en permanence sa position par rapport au rang pour que le porte-outil suive le rang qui n'est généralement pas rectiligne.

Pour remédier à cet inconvénient, le document FR-2.988.555 propose un châssis qui est configuré pour se déplacer entre deux rangs et qui supporte deux supports d'outil prévus pour travailler simultanément les deux rangs. Chaque support d'outil comprend un capteur pour mesurer l'effort exercé par l'outil et le châssis comprend un mécanisme pour comparer les valeurs mesurées et ajuster automatiquement les positions des supports d'outil afin que la différence entre les valeurs mesurées des efforts soit nulle.

Cette solution n'est pas pleinement satisfaisante car elle nécessite l'utilisation de deux supports d'outil pour fonctionner.

Le document FR-3.0023.447 décrit un support d'outil relié à un châssis par un parallélogramme déformable dont le mouvement est contrôlé par un actionneur. Le châssis comprend un capteur pour mesurer une valeur de l'effort exercé par le support d'outil sur le châssis et une commande pour contrôler l'actionneur en fonction de la valeur mesurée qui doit rester dans une plage donnée.

Cette solution nécessite deux parallélogrammes déformables un pour contrôler l'évitement des pieds de vigne et un autre pour contrôler la position du support d'outil par rapport au rang de vigne.

Pour les deux modes de réalisation décrit dans les documents FR-2.988.555 et FR-3.0023.447, on note que la plage de dégagement est relativement faible de l'ordre de 150 mm voire moins. De plus, dans les deux cas, le réglage est relativement complexe.

La présente invention vise à remédier au moins en partie aux inconvénients de l'art antérieur.

A cet effet, l'invention a pour objet un procédé de pilotage d'un support d'outil équipé d'un système d'évitement d'obstacles positionnés en rang, le support d'outil comprenant :
- un premier support configuré pour être relié à un engin motorisé apte à se déplacer le long du rang,
- un deuxième support supportant un outil,
- une liaison qui relie les premier et deuxième supports et qui est configurée pour permettre un mouvement du deuxième support par rapport au premier support selon une direction comportant au moins une composante transversale,
- un actionneur configuré pour contrôler la liaison et qui comprend des première et deuxième fins de course,
- un système d'asservissement configuré pour piloter l'actionneur afin que l'outil se déplace d'une position sortie entre les obstacles, correspondant à une première limite de la course de l'actionneur, à une position rétractée lors du passage d'un obstacle, correspondant à une deuxième limite de la course de l'actionneur, un point de l'outil étant positionné par rapport au rang à une distance de réglage en position sortie.

Selon l'invention, le procédé comprend une étape de mesure de la déformation de la liaison à des instants donnés lors des passages des obstacles, une étape de comparaison des valeurs mesurées de la déformation de la liaison lors du passage de deux obstacles et une étape de réalisation si nécessaire, en fonction de cette étape de comparaison, d'une action corrective afin que la distance de réglage soit sensiblement constante.

Cette solution simple et compacte permet de positionner automatiquement et de manière autonome le support d'outil par rapport au rang même si le conducteur de l'engin motorisé dévie d'une trajectoire idéale parallèle au rang et/ou si le rang n'est pas rectiligne et tend à se rapprocher ou s'écarter de l'engin motorisé.

L'invention a également pour objet un support d'outil permettant la mise en œuvre du procédé de pilotage qui comprend un capteur configuré pour mesurer une valeur de la déformation de la liaison à des instants donnés lors des passages des obstacles et une commande configurée pour comparer deux valeurs mesurées lors des passages de deux obstacles et pour réaliser si nécessaire, en fonction de cette comparaison, une action corrective afin que la distance de réglage soit sensiblement constante.

D'autres caractéristiques et avantages ressortiront de la description de l'invention qui va suivre, description donnée à titre d'exemple uniquement, en regard des dessins annexés parmi lesquels :
- La figure 1 est une vue de dessus d'un support d'outil équipé d'un outil d'un premier type, à l'état replié en trait fort et à l'état déployé en trait mixte, qui illustre un mode de réalisation de l'invention,
- La figure 2A est une vue en perspective du support d'outil visible sur la figure 1 à l'état rétracté,
- La figure 2B est une vue en perspective du support d'outil visible sur la figure 1 à l'état déployé,
- La figure 3 est une vue en perspective du support d'outil visible sur la figure 1 sans outil,
- La figure 4 est une vue de dessus du support d'outil visible sur la figure 1 sans outil,
- La figure 5 est une vue en perspective du support d'outil visible sur la figure 1, équipé d'un outil d'un deuxième type,
- La figure 6 est une vue de dessus d'un support d'outil équipé d'un outil d'un troisième type qui illustre un autre mode de réalisation de l'invention, et
- Les figures 7 et 8 sont des schémas qui illustrent le fonctionnement d'un support d'outil selon l'invention.

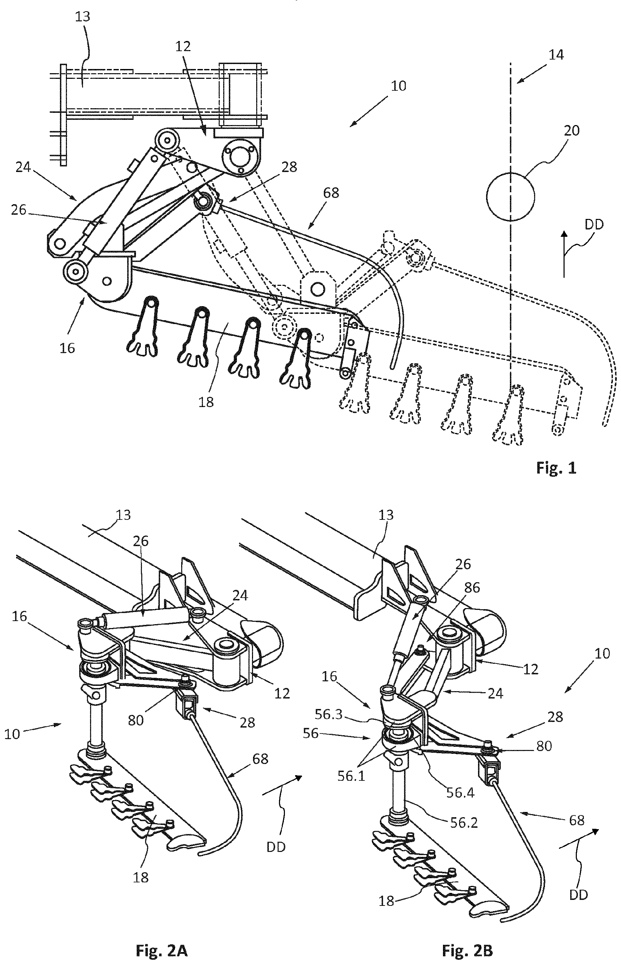

Sur les figures 1, 5 et 6, on a représenté un support d'outil 10 qui comprend un premier support 12 relié directement ou indirectement à un engin motorisé 13 apte à se déplacer selon une direction de déplacement DD le long d'un rang 14 d'obstacles 20.

Pour la suite de la description, une direction longitudinale est parallèle à la direction de déplacement DD et une direction transversale est une direction horizontale et perpendiculaire à la direction de déplacement DD.

Le support d'outil 10 comprend également un deuxième support 16 configuré pour supporter un outil 18 et le positionner par rapport au rang 14.

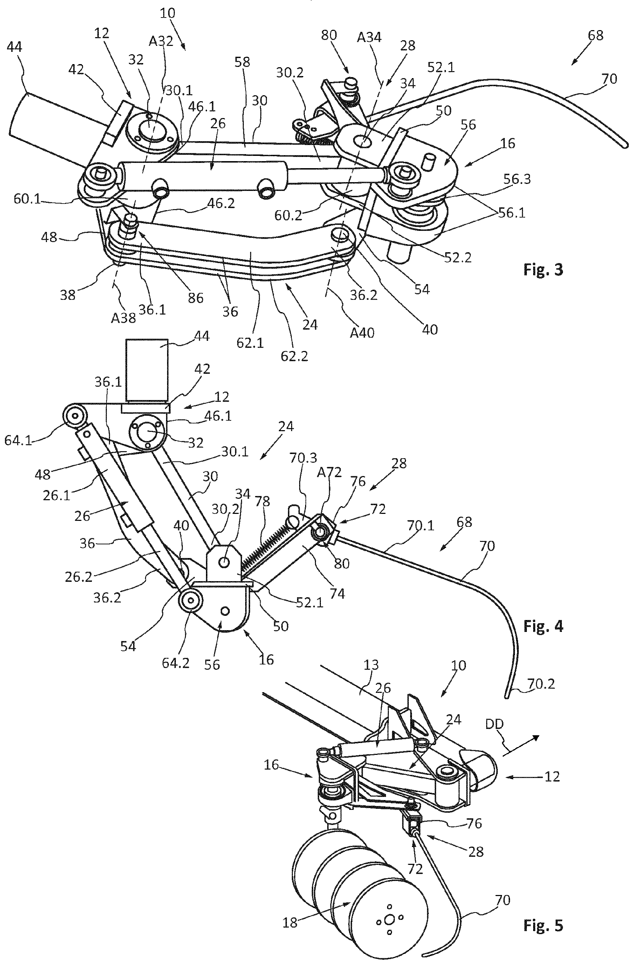

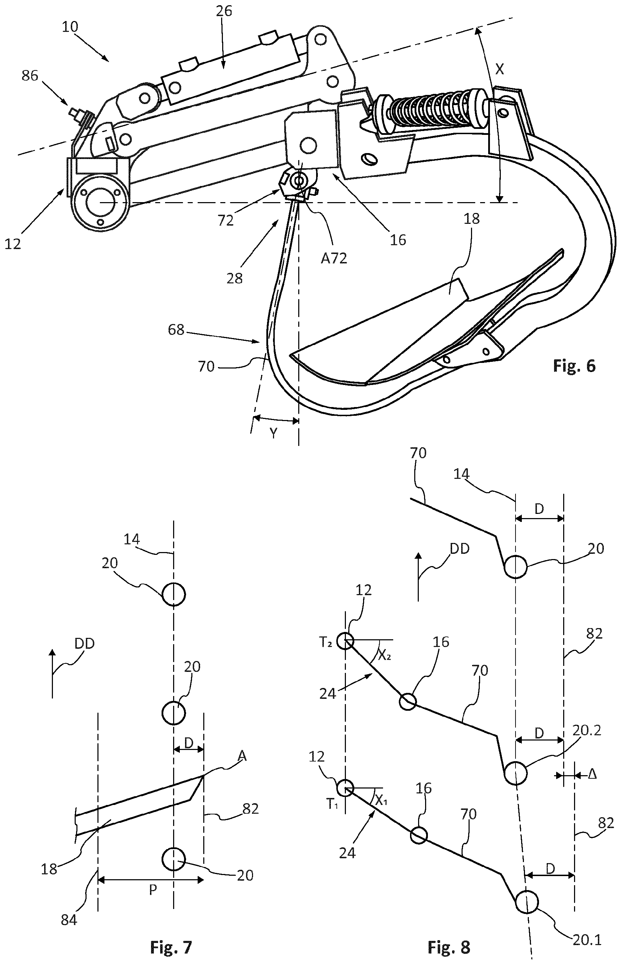

A titre d'exemple et de manière non limitative, l'outil 18 est une lame, comme illustré sur la figure 1, des disques, comme illustré sur la figure 5, ou une décavaillonneuse, comme illustré sur la figure 6. Selon une application non limitative, le rang 14 est un rang de vigne et les obstacles 20 sont des pieds de vigne et des piquets. En variante, les obstacles 20 peuvent être des troncs d'arbre lorsque le support d'outil 10 est utilisé dans un verger.

Le support d'outil 10 est équipé d'un système d'évitement qui comprend :
- une liaison 24 telle qu'une articulation qui relie les premier et deuxième supports 12, 16 et qui est configurée pour déplacer le deuxième support 16 par rapport au premier support 12 selon une direction qui comprend au moins une composante selon la direction transversale,
- un actionneur 26 pour contrôler la déformation de la liaison 24,
- un système d'asservissement 28 configuré pour piloter l'actionneur 26 afin que l'outil 18 se déplace d'une position sortie entre les obstacles 20, correspondant à une première limite de la course de l'actionneur 26, à une position rétractée lors du passage d'un obstacle, correspondant à une deuxième limite de la course de l'actionneur 26.

Selon une configuration, la liaison 24 comprend :
- Une première biellette 30 qui présente :
   ∘ une première extrémité 30.1 reliée au premier support 12 par une première liaison pivotante 32 avec un premier axe de pivotement A32 orienté verticalement, et
   ∘ une deuxième extrémité 30.2 reliée au deuxième support 16 par une deuxième liaison pivotante 34 avec un deuxième axe de pivotement A34 parallèle au premier axe de pivotement A32,
- une deuxième biellette 36 qui présente :
   ∘ une première extrémité 36.1 reliée au premier support 12 par une troisième liaison pivotante 38 avec un troisième axe de pivotement A38 distant et parallèle au premier axe de pivotement A32, et
   ∘ une deuxième extrémité 36.2 reliée au deuxième support 16 par une quatrième liaison pivotante 40 avec un quatrième axe de pivotement A40 distant et parallèle au deuxième axe de pivotement A34.

Les premier et deuxième supports 12 et 16, les première et deuxième biellettes 30 et 36 et les axes de pivotement A32, A34, A38, A40 sont agencés de manière à former un parallélogramme déformable configuré pour permettre au deuxième support 16 de se déplacer par rapport au premier support 12 selon au moins une direction transversale.

Selon un agencement, le deuxième support 16 est décalé vers l'arrière (selon le sens d'avance) par rapport au premier support 12.

Selon une particularité de l'invention, le parallélogramme déformable est configuré pour obtenir une plage de fonctionnement (qui correspond à la distance entre la position sortie et la position rétractée) supérieure à 200 mm, de préférence de l'ordre de 300 mm.

Selon un mode de réalisation, le premier support 12 comprend :
- une platine 42 positionnée dans un plan vertical,
- un système de fixation démontable 44 positionné sur une première face de la platine 42 et configuré pour permettre de relier directement ou indirectement le premier support 12 à l'engin motorisé 13,
- des première et deuxième pattes 46.1 et 46.2 positionnées sur la deuxième face de la platine 42 de sorte à former une chape supportant le premier axe de pivotement A32, la deuxième patte 46.2 étant décalée vers le bas par rapport à la première patte 46.1,
- un premier prolongement 48 de la deuxième patte 46.2, à l'extrémité duquel est positionné le troisième axe de pivotement A36.

La platine 42, le système de fixation démontable 44, les première et deuxième pattes 46.1, 46.2 forment une seule et même pièce par exemple mécano-soudée.

Le deuxième support 16 comprend :
- une platine 50 positionnée dans un plan vertical,
- des première et deuxième pattes 52.1 et 52.2 positionnées sur une première face de la platine 50 de sorte à former une chape supportant le deuxième axe de pivotement A34, la deuxième patte 52.2 étant décalée vers le bas par rapport à ma première patte 52.1,
- un deuxième prolongement 54 positionné sur la première face de la platine 50, à l'extrémité de laquelle est positionné le quatrième axe de pivotement A38,
- un porte-outil 56, positionné sur la deuxième face de la platine 50, configuré pour relier un outil 18 au deuxième support 16 de manière démontable.

La platine 50, les première et deuxième pattes 52.1, 52.2, le deuxième prolongement 54 et le porte-outil 56 forment une seule et même pièce par exemple mécano-soudée.

La première biellette 30 comprend un corps 58 avec à chaque extrémité deux cylindres 60.1, 60.2 configurés pour s'insérer entre respectivement les première et deuxième pattes 46.1 et 46.2 du premier support 12 et les première et deuxième pattes 52.1 et 52.2 du deuxième support 16.

La deuxième biellette 36 comprend deux plaques 62.1 et 62.2 disposées de part et d'autre des premier et deuxième prolongements 48, 54 et les reliant.

A titre d'exemple, comme illustré sur les figures 2B et 3, le porte-outil 56 se présente sous la forme d'une chape 56.1 configurée pour supporter un axe de pivotement 56.2 solidaire de l'outil 18 et orienté verticalement. L'axe de pivotement 56.2 comprend une première couronne dentée 56.3 solidaire de l'axe de pivotement 56.2. En complément, la chape 56.1 comprend une deuxième couronne dentée 56.4 qui est solidaire de la chape 56.1 et qui est configurée pour coopérer avec la première couronne dentée 56.3. Cette solution permet de pouvoir ajuster la position angulaire de l'outil 18 par rapport au deuxième support 16.

Bien entendu, la description des premier et deuxième supports 12 et 16, des première et deuxième biellettes 30 et 36 est donnée à titre d'exemple et n'est en aucun cas limitative. De préférence, la liaison 24 comprend au moins un axe de pivotement vertical pour permettre au deuxième support 16 de se déplacer par rapport au premier support 12 selon au moins une direction transversale.

Le mode de réalisation sous la forme d'un parallélogramme déformable a notamment pour avantage de conserver l'orientation de l'outil 18 par rapport au rang 14.

Selon une configuration non limitative visible notamment sur la figure 4, l'actionneur 26 comprend un corps 26.1 dont une extrémité est reliée par une première liaison rotule 64.1 au premier support 12 et une tige 26.2 dont une extrémité est reliée par une deuxième liaison rotule 64.2 au deuxième support 16. De préférence, les premier et deuxième supports 12 et 16 sont configurés de sorte que les liaisons rotules 64.1 et 64.2 soient écartées des première et deuxième liaisons pivotantes 32 et 34 afin d'obtenir un effet de levier. L'actionneur 26 est configuré pour s'allonger entre une première fin de course correspondant à la configuration de la tige 26.2 totalement rentrée et une deuxième fin de course correspondant à la configuration de la tige 26.2 totalement sortie.

Selon un mode de réalisation privilégié, l'actionneur 26 est un vérin hydraulique.

Le système d'asservissement 28 comprend également un palpeur 68 configuré pour prendre appui contre les obstacles 20 et ce afin de les détecter. Selon une configuration, le palpeur 68 est relié au deuxième support 16. Cette configuration permet d'obtenir un suivi plus précis. Selon un mode de réalisation visible sur la figure 4, le palpeur 68 comprend une canne 70 et une liaison pivotante 72 avec un axe de pivotement A72 orienté verticalement, reliant la canne 70 à une extension 74 solidaire du deuxième support 16, plus particulièrement de la platine 50 du deuxième support 16.

La canne 70 comprend une portion centrale rectiligne 70.1, une première extrémité courbe 70.2 et une deuxième extrémité 70.3, la portion centrale rectiligne 70.1 et la deuxième extrémité 70.3 étant disposées de part et d'autre de l'axe de pivotement A72. La première extrémité courbe 70.2 est orientée vers l'arrière par rapport à la portion centrale rectiligne 70.1.

La canne 70 est mobile entre une position repos dans laquelle la canne 70 n'est pas en contact avec un obstacle 20 et une position pivotée dans laquelle la canne 70 est en contact avec un obstacle 20.

En position repos, la portion centrale rectiligne 70.1 est orientée selon la direction transversale. L'extension 74 a une géométrie telle que la portion centrale rectiligne 70.1 soit décalée vers l'avant par rapport à l'outil 18 d'une distance de garde longitudinale et que la première extrémité 70.2 soit décalée selon la direction transversale par rapport à l'outil 18 d'une distance de garde transversale.

Selon un réglage, les distances de garde longitudinale et transversale sont approximativement égales à 20 cm.

L'extension 74 comprend une butée 76 pour immobiliser la canne 70 en position repos. En complément, le palpeur 68 comprend un ressort de traction 78 qui relie la deuxième extrémité 70.3 et le deuxième support 16 et qui est configuré pour maintenir la canne 70 en position repos contre la butée 76.

Le système d'asservissement 28 comprend un premier capteur 80 configuré pour détecter au moins une modification de la position angulaire du palpeur 68. La position angulaire correspond à l'angle Y formé par la portion centrale rectiligne 70.1 de la canne 70 entre une position initiale lorsque la canne 70 est en position repos et une position pivotée lorsque la canne 70 est en position pivotée. En l'absence d'obstacle, l'angle Y est égal à une première valeur. Lorsque le support d'outil 10 avance et que la canne 70 est en contact avec un obstacle, l'angle Y augmente (ou diminue) progressivement jusqu'à un angle maximal (ou minimale) au moment où la canne 70 perd le contact avec l'obstacle 20. Dès lors, en raison de l'action du ressort de traction 78, l'angle Y diminue (ou augmente) très rapidement jusqu'à la première valeur.

Selon un mode de réalisation, l'axe de pivotement A72 est fixe par rapport à la canne 70 et peut pivoter par rapport à l'extension 74. En complément, le premier capteur 80 est fixe par rapport à l'extension 74 et positionné dans le prolongement de l'axe de pivotement A72.

Le système d'asservissement 28 comprend une commande configurée pour contrôler l'actionneur 26 en fonction de la position angulaire du palpeur 68.

Selon un mode d'asservissement simplifié, la commande est paramétrée de manière à provoquer le passage de l'outil de la position sortie à la position rétractée dès que le premier capteur 80 détecte une modification de la position angulaire du palpeur 68.

Selon un mode de réalisation, le premier capteur 80 est configuré pour mesurer une variation de la position angulaire du palpeur 68.

Selon un autre mode d'asservissement, la commande est paramétrée de manière à provoquer le passage de l'outil 18 de la position sortie à la position rétractée dès que la valeur de la position angulaire mesurée par le premier capteur 80 dépasse un seuil donné. Selon un mode de réalisation, la commande comprend un distributeur fonctionnant de manière proportionnelle. Ainsi, selon un mode d'asservissement plus évolué, dit proportionnel, la commande est configurée pour piloter de manière proportionnelle l'actionneur 26 en fonction de la valeur de la position angulaire du palpeur 68 mesurée par le premier capteur 80. Ainsi, l'outil 18 se décale selon la direction transversale proportionnellement à la position angulaire du palpeur 68.

Comme illustré sur la figure 7, le système d'asservissement 28 est réglé de manière à ce qu'un point A de l'outil 18 soit positionné à une distance de réglage D par rapport au rang 14 lorsque l'outil 18 est en position sortie et que l'actionneur 26 atteint la première limite de course. Cette distance de réglage D peut être positive, négative ou nulle. La distance de réglage D est fixée par l'utilisateur en début de rang.

Ainsi en fonctionnement, l'outil 18 se déplace de la position sortie (correspondant à la première limite de la course de l'actionneur 26) matérialisée par une première ligne fictive 82 jusqu'à la position rétractée (correspondant à la deuxième limite de la course de l'actionneur 26) matérialisée par une deuxième ligne fictive 84. Les première et deuxième lignes fictives sont séparées par une distance P correspondant à la plage de fonctionnement de l'outil 18. De préférence, les première et deuxième limites de la course de l'actionneur 26 sont centrées par rapport aux fins de course de l'actionneur 26.

Selon une autre caractéristique de l'invention, le système d'asservissement 28 comprend un deuxième capteur 86 configuré pour mesurer une valeur de la déformation de la liaison 24 à un instant donné lors du passage de chaque obstacle 20, la commande étant configurée pour comparer deux valeurs mesurées lors des passages de deux obstacles et pour réaliser si nécessaire, en fonction de cette comparaison, une action corrective pour que la distance de réglage D soit approximativement constante quelle que soit l'évolution du rang 14.

Selon une configuration, la valeur mesurée de la déformation est un angle X entre une position initiale d'une des deux biellettes 30, 36 lorsque l'outil 18 est en position sortie et une position pivotée de ladite biellette 30, 36 lorsque l'outil 18 est en position rétractée et que la canne 70 du palpeur 68 perd le contact avec un obstacle 20.

Selon un mode de réalisation, le deuxième capteur 86 est fixé sur le premier support 12 et disposé dans le prolongement du troisième axe de pivotement A38 reliant la deuxième biellette 36 au premier support 12. Selon ce mode de réalisation, le troisième axe de pivotement A38 est fixe par rapport à la deuxième biellette 36 et peut pivoter par rapport au premier support 12. Ainsi, le deuxième capteur 86 est configuré pour mesurer l'angle de pivotement du troisième axe de pivotement A38.

Comme illustré sur la figure 8, à un instant T1, lorsque la canne 70 perd le contact avec l'obstacle 20.1, le deuxième capteur 86 mesure l'angle X1 correspondant à la position angulaire de la deuxième biellette 36. Cette valeur mesurée de la position angulaire à l'instant T1 est transmise à la commande qui compare cette valeur mesurée à l'instant T1 avec la valeur mesurée pour le précédent obstacle. Si la différence entre les deux valeurs est nulle ou inférieure à un seuil donné, aucune correction n'est faite.

Entre les obstacles 20.1 et 20.2, le rang 14 tend à se rapprocher de l'engin motorisé 13. A l'instant T2, lorsque la canne 70 perd le contact avec l'obstacle 20.2, le deuxième capteur 86 mesure l'angle X2 correspondant à la position angulaire de la deuxième biellette 36. Cette valeur mesurée de la position angulaire à l'instant T2 est transmise à la commande qui compare cette valeur X2 mesurée à l'instant T2 avec la valeur X1 mesurée à l'instant T1. Comme illustré sur la figure 8, les angles X2 et X1 mesurés sont différents du fait que le rang 14 se rapproche de l'engin motorisé et du premier support 12. La commande pilote alors l'actionneur 26 de sorte que la distance de réglage D soit constante en modifiant les limites de la course de l'actionneur 26.

Cette solution permet de positionner automatiquement et de manière autonome le support d'outil 10 par rapport au rang 14, et ce même si le conducteur de l'engin motorisé 13 dévie d'une trajectoire idéale parallèle au rang 14 et/ou si le rang 14 n'est pas rectiligne et tend à se rapprocher ou s'écarter de l'engin motorisé 13.

Les instants T1, T2 de la mesure de la déformation de la liaison 24 correspondent aux moments où la canne 70 perd le contact avec les obstacles 20. Ces instants sont déterminés grâce à la mesure de la position angulaire du palpeur 68, chaque instant correspondant à un maximum de la valeur mesurée de la position angulaire du palpeur 68.

Selon une autre caractéristique de l'invention, le système d'asservissement est de type électrohydraulique, à savoir que les capteurs et la commande sont de type électrique, l'actionneur étant de type hydraulique et le distributeur hydraulique étant contrôlé par des signaux électriques.

De préférence, le système d'asservissement 28 comprend différents moyens de paramétrage pour régler les première et deuxième limites de la course de l'actionneur 26 et/ou la distance de réglage D.

Selon une configuration, ces moyens de paramétrage sont placés sur un pupitre positionné à proximité du poste de conduite de l'engin motorisé 13. Ainsi, le conducteur de l'engin motorisé peut régler le support d'outil 10 depuis son poste de conduite.

Selon un mode de réalisation, les moyens de paramétrage se présentent chacun sous la forme d'un potentiomètre. Néanmoins, l'invention n'est pas limitée à ce mode de réalisation. Avantageusement, la commande est configurée pour calculer une première distance entre la première fin de course et la première limite de la course de l'actionneur 26, une deuxième distance entre la deuxième fin de course et la deuxième limite de la course de l'actionneur 26 et pour informer le conducteur de l'engin motorisé si au moins l'une des première et deuxième distances calculées est inférieure à au moins un seuil donné. En effet, si l'une des première et deuxième distances calculées est nulle alors le support d'outil 10 ne peut plus corriger automatiquement la position de l'outil 18 par rapport au rang 14.

De préférence, le système d'asservissement 28 comprend un système d'alerte pour informer le conducteur si au moins l'une des première et deuxième distances calculées est inférieure à au moins un seuil donné. Selon un mode de réalisation, le système d'asservissement 28 comprend des voyants lumineux, par exemple placés sur le pupitre, qui s'allument ou qui changent de couleur en fonction notamment des première et deuxième distances calculées. Ainsi, pour chaque première et deuxième distance calculée, la commande comprend une série de voyants vert, orange et rouge, le voyant vert étant le seul allumé lorsque la première ou deuxième distance calculée est supérieure à un premier seuil donné, le voyant orange étant le seul allumé lorsque la première ou deuxième distance calculée est inférieure au premier seuil donné et supérieure à un deuxième seuil donné, le voyant rouge étant le seul allumé lorsque la première ou deuxième distance calculée est inférieure au deuxième seuil donné.

L'invention a également pour objet un procédé de pilotage du support d'outil précédemment décrit.

Au départ, le conducteur de l'engin motorisé règle les limites de la course de l'actionneur 26, qui correspondent aux positions sortie et rétractée de l'outil 18 et la distance de réglage D, qui correspond à la distance séparant le rang 14 et un point de l'outil 18 en position sortie. Lorsque le support d'outil 18 se déplace le long du rang 14, à chaque obstacle 20 le palpeur 68 en contact avec l'obstacle 20 pivote. La commande pilote l'actionneur 26, à partir de la position angulaire du palpeur 68 mesurée par le premier capteur 80, pour provoquer le passage de l'outil 18 de la position sortie à la position rétractée et ce afin de permettre le passage de l'obstacle.

Lors du passage de chaque obstacle 20, au moment où le palpeur 68 perd le contact avec l'obstacle 20, la déformation de la liaison 24 est mesurée. La commande compare cette valeur mesurée de la déformation de liaison 24 avec la valeur mesurée lors du passage de l'obstacle précédent et corrige les limites de la course de l'actionneur 26 (et donc les positions sortie et rétractée de l'outil 18) en fonction de cette comparaison de sorte que la distance de réglage D soit sensiblement constante. Si la valeur mesurée est constante d'un obstacle à l'obstacle suivant, aucune correction n'est faite. Si les valeurs mesurées sont différentes d'un obstacle à l'obstacle suivant, la commande corrige les limites de la course de l'actionneur 26 en les décalant proportionnellement à la différence entre les valeurs mesurées pour que la distance de réglage D soit constante. Ainsi, l'outil 20 est positionné de manière autonome et automatique par rapport au rang 14 et ce même si la trajectoire de l'engin motorisé 13 et le rang 14 ne sont pas parallèles.

Le procédé de pilotage comprend également une étape de calcul d'une distance séparant chaque limite de la course de l'actionneur 26 avec la fin de course de l'actionneur 26 la plus proche et une étape d'alerte lorsque la distance calculée pour au moins une limite de la course de l'actionneur est inférieure à au moins un seuil donné.

## Revendications

1. Procédé de pilotage d'un support d'outil (10) équipé d'un système d'évitement d'obstacles (20) positionnés en rang (14), le support d'outil comprend :
- un premier support (12) configuré pour être relié à un engin motorisé (13) apte à se déplacer le long du rang (14),
- un deuxième support (16) supportant un outil (18),
- une liaison (24) qui relie les premier et deuxième supports (12, 16) et qui est configurée pour permettre un mouvement du deuxième support (16) par rapport au premier support (12) selon une direction comportant au moins une composante transversale,
- un actionneur (26) configuré pour contrôler la liaison (24) et qui comprend des première et deuxième fins de course,
- un système d'asservissement (28) configuré pour piloter l'actionneur (26) afin que l'outil (18) se déplace d'une position sortie entre les obstacles (20), correspondant à une première limite de la course de l'actionneur (26), à une position rétractée lors du passage d'un obstacle (20), correspondant à une deuxième limite de la course de l'actionneur (26);
un point de l'outil étant positionné par rapport au rang (14) à une distance de réglage (D) en position sortie, **caractérisé en ce que** le procédé comprend une étape de mesure de la déformation de la liaison (24) à des instants donnés lors des passages des obstacles (20), une étape de comparaison des valeurs mesurées de la déformation de la liaison (24) lors du passage de deux obstacles (20) et une étape de réalisation si nécessaire, en fonction de cette étape de comparaison, d'une action corrective afin que la distance de réglage (D) soit sensiblement constante.

2. Procédé selon la revendication 1, **caractérisé en ce que** l'action corrective consiste à décaler les limites de la course de l'actionneur (26) proportionnellement à la différence entre les valeurs mesurées de la déformation de la liaison (24) lors du passage de deux obstacles (20).

3. Procédé selon la revendication 1 ou 2, **caractérisé en ce que** le système d'asservissement (28) comprend un palpeur (68) configuré pour détecter les obstacles en prenant appui contre lesdits obstacles (20) et **en ce que** l'étape de mesure de la déformation de la liaison (24) est réalisée pour chaque obstacle (20) lorsque le palpeur (68) perd le contact avec l'obstacle (20).

4. Procédé selon la revendication 3, **caractérisé en ce qu'**il comprend une étape de mesure de la position angulaire du palpeur (68), l'étape de mesure de la déformation de la liaison (24) étant réalisée lorsque la valeur mesurée de la position angulaire du palpeur (68) atteint un maximum.

5. Procédé selon l'une des revendications précédentes, **caractérisé en ce qu'**il comprend une étape de calcul d'une distance séparant chaque limite de la course de l'actionneur (26) avec la fin de course de l'actionneur (26) la plus proche et une étape d'alerte lorsque la distance calculée pour au moins une limite de la course de l'actionneur (26) est inférieure à au moins un seuil donné.

6. Support d'outil permettant la mise en œuvre du procédé selon l'une des revendications précédentes, ledit support d'outil comprenant :
- un premier support (12) configuré pour être relié à un engin motorisé (13) apte à se déplacer le long du rang (14),
- un deuxième support (16) supportant un outil (18),
- une liaison (24) qui relie les premier et deuxième supports (12, 16) et qui est configurée pour permettre un mouvement du deuxième support (16) par rapport au premier support (12) selon une direction comportant au moins une composante transversale,
- un actionneur (26) configuré pour contrôler la liaison (24) et qui comprend des première et deuxième fins de course,
- un système d'asservissement (28) configuré pour piloter l'actionneur (26) afin que l'outil (18) se déplace d'une position sortie entre les obstacles (20), correspondant à une première limite de la course de l'actionneur (26), à une position rétractée lors du passage d'un obstacle (20), correspondant à une deuxième limite de la course de l'actionneur (26);
un point de l'outil étant apte à être positionné par rapport au rang (14) à une distance de réglage (D) en position sortie, **caractérisé en ce que** le système d'asservissement comprend un capteur (86) configuré pour mesurer une valeur de la déformation de la liaison (24) à des instants donnés lors des passages des obstacles (20) et une commande configurée pour comparer deux valeurs mesurées lors des passages de deux obstacles et pour réaliser si nécessaire, en fonction de cette comparaison, une action corrective afin que la distance de réglage (D) soit sensiblement constante.

7. Support d'outil selon la revendication précédente, **caractérisé en ce que** le système d'asservissement (28) comprend un palpeur (68) configuré pour pivoter en prenant appui contre lesdits obstacles (20) et un capteur (80) configuré pour mesurer une variation de la position angulaire du palpeur (68) lorsque ledit palpeur (68) pivote en appui contre un obstacle (20).

8. Support d'outil selon la revendication précédente, **caractérisé en ce que** la commande comprend un distributeur fonctionnant de manière proportionnelle, l'actionneur (26) étant piloté de manière proportionnelle en fonction de la valeur mesurée de la position angulaire du palpeur (68).

9. Support d'outil selon l'une des revendications 6 à 8, **caractérisé en ce que** le système d'asservissement est de type électrohydraulique et comprend des moyens de paramétrage pour régler les première et deuxième limites de la course de l'actionneur (26) et/ou la distance de réglage (D).

10. Support d'outil selon la revendication précédente, **caractérisé en ce que** les moyens de paramétrage sont placés sur un pupitre positionné à proximité d'un poste de conduite de l'engin motorisé.

11. Support d'outil selon l'une des revendications 6 à 10, **caractérisé en ce que** le système d'asservissement (28) comprend un système d'alerte pour informer un conducteur si une première distance calculée entre la première limite de la course de l'actionneur (26) et la première fin de course de l'actionneur (26) ou une deuxième distance calculée entre la deuxième limite de la course de l'actionneur (26) et la deuxième fin de ourse de l'actionneur (26) est inférieure à au moins un seuil donné.

## Patentansprüche

1. Verfahren zur Steuerung eines Werkzeugträgers (10), der mit einem System zur Vermeidung von in Reihe (14) angeordneten Hindernissen (20) versehen ist, wobei der Werkzeugträger umfasst:
- eine erste Halterung (12), die dazu eingerichtet ist, mit einer motorisierten Maschine (13) verbunden zu sein, die dazu geeignet ist, sich entlang der Reihe (14) zu bewegen,
- eine zweite Halterung (16), die das Werkzeug (18) hält,
- eine Verbindung (24), die die erste und zweite Halterung (12, 16) verbindet und dazu eingerichtet ist, eine Bewegung der zweiten Halterung (16) bezüglich der ersten Halterung (12) in eine wenigstens eine Querkomponente aufweisende Richtung zu ermöglichen,
- ein Betätigungsgerät (26), das dazu eingerichtet ist, die Verbindung (24) zu steuern, und das eine erste und zweite Endbegrenzung aufweist,
- ein Steuerungssystem (28), das dazu eingerichtet ist, das Betätigungsgerät (26) zu steuern, sodass sich das Werkzeug (18) von einer ausgefahrenen Stellung zwischen den Hindernissen (20) entsprechend einer ersten Bewegungsgrenze des Betätigungsgeräts (26) zu einer eingefahrenen Stellung beim Vorbeifahren an einem Hindernis (20) entsprechend einer zweiten Bewegungsgrenze des Betätigungsgeräts (26) bewegt;
wobei eine Werkzeugspitze sich im ausgefahrenen Zustand in Bezug auf die Reihe (14) in einem Regelabstand (D) befindet,
**dadurch gekennzeichnet, dass** das Verfahren einen Verfahrensschritt zur Messung der Verformung der Verbindung (24) zu bestimmten Zeitpunkten bei der Vorbeifahrt an den Hindernissen (20), einen Verfahrensschritt eines Vergleichs der gemessenen Werte der Verformung der Verbindung (24) bei der Vorbeifahrt an zwei Hindernissen (20) und, falls erforderlich, einen Verfahrensschritt einer Ausführung einer Korrekturhandlung in Abhängigkeit von dem Verfahrensschritt des Vergleichs umfasst, so dass der Regelabstand (D) im Wesentlichen konstant ist.

2. Verfahren nach Anspruch 1, **dadurch gekennzeichnet, dass** die Korrekturhandlung darin besteht, die Bewegungsgrenzen des Betätigungsgeräts (26) proportional zur Differenz zwischen den gemessenen Werten der Deformation der Verbindung (24) bei der Vorbeifahrt an den beiden Hindernissen (20) zu versetzen.

3. Verfahren nach Anspruch 1 oder 2, **dadurch gekennzeichnet, dass** das Steuersystem (28) einen Fühler (68) aufweist, der dazu eingerichtet ist, Hindernisse beim Auftreffen auf die Hindernisse (20) zu erfassen, und dass der Verfahrensschritt der Messung der Deformation der Verbindung (24) bei jedem Hindernis (20) ausgeführt wird, wenn der Fühler (68) den Kontakt mit dem Hindernis (20) verliert.

4. Verfahren nach Anspruch 3, **dadurch gekennzeichnet, dass** dieses einen Verfahrensschritt der Messung der Winkelposition des Fühlers (68) umfasst, wobei der Verfahrensschritt der Messung der Deformation der Verbindung (24) ausgeführt wird, wenn der Messwert der Winkelposition des Fühlers (68) ein Maximum erreicht.

5. Verfahren nach einem der vorhergehenden Ansprüche, **dadurch gekennzeichnet, dass** dieses einen Verfahrensschritt zur Berechnung einer Entfernung umfasst, die jeweils zwischen einer Bewegungsgrenze des Betätigungsgeräts (26) und der jeweils nächstliegenden Endbegrenzung des Betätigungsgeräts (26) liegt, und einen Verfahrensschritt der Alarmierung umfasst, wenn die errechnete Entfernung für wenigstens eine Bewegungsgrenze des Betätigungsgeräts (26) unter wenigstens einem bestimmten Schwellwert liegt.

6. Werkzeughalterung, die ein Ausführen des Verfahrens nach einem der vorhergehenden Ansprüche gestattet, wobei die Werkzeughalterung umfasst:
- eine erste Halterung (12), die dazu eingerichtet ist, mit einer motorisierten Maschine (13) verbunden zu sein, die dazu geeignet ist, sich entlang der Reihe (14) zu bewegen,
- eine zweite Halterung (16), die das Werkzeug (18) hält,
- eine Verbindung (24), die die erste und zweite Halterung (12, 16) verbindet und dazu eingerichtet ist, eine Bewegung der zweiten Halterung (16) bezüglich der ersten Halterung (12) in eine wenigstens eine Querkomponente aufweisende Richtung zu ermöglichen,
- ein Betätigungsgerät (26), das dazu eingerichtet ist, die Verbindung (24) zu steuern, und das eine erste und zweite Endbegrenzung aufweist,
- ein Steuerungssystem (28), das dazu eingerichtet ist, das Betätigungsgerät (26) zu steuern, sodass sich das Werkzeug (18) von einer ausgefahrenen Stellung zwischen den Hindernissen (20) entsprechend einer ersten Bewegungsgrenze des Betätigungsgeräts (26) zu einer eingefahrenen Stellung beim Vorbeifahren an einem Hindernis (20) entsprechend einer zweiten Bewegungsgrenze des Betätigungsgeräts (26) bewegt;
wobei eine Werkzeugspitze sich im ausgefahrenen Zustand in Bezug auf die Reihe (14) in einem Regelabstand (D) befindet,
**dadurch gekennzeichnet, dass** das Steuersystem einen Aufnehmer (86) aufweist, der dazu eingerichtet ist, einen Wert für die Verformung der Verbindung (24) zu bestimmten Zeitpunkten während der Vorbeifahrt an den Hindernissen (20) zu messen, und eine Steuerung aufweist, die dazu eingerichtet ist, zwei bei der Vorbeifahrt an den beiden Hindernissen gemessene Werte zu vergleichen und, falls erforderlich, eine Korrekturhandlung in Abhängigkeit von diesem Vergleich auszuführen, sodass der Regelabstand (D) im Wesentlichen konstant ist.

7. Werkzeughalterung nach dem vorhergehenden Anspruch, **dadurch gekennzeichnet, dass** das Steuersystem (28) einen Fühler (68) aufweist, der dazu eingerichtet ist, beim Auftreffen auf die Hindernisse (20) zu verschwenken, und einen Aufnehmer (80) aufweist, der dazu eingerichtet ist, eine Änderung der Winkelposition des Fühlers (68) zu messen, wenn der Fühler (68) beim Auftreffen auf ein Hindernis (20) verschwenkt.

8. Werkzeughalterung nach dem vorhergehenden Anspruch, **dadurch gekennzeichnet, dass** die Steuerung eine Ausgabe aufweist, die auf proportionale Weise funktioniert, sodass das Betätigungsgerät (26) auf proportionale Weise in Abhängigkeit von dem gemessenen Wert für die Winkelstellung des Fühlers (68) gesteuert ist.

9. Werkzeughalterung nach einem der Ansprüche 6 bis 8, **dadurch gekennzeichnet, dass** das Steuersystem vom elektrohydraulischen Typ ist und Parametrisierungsmittel aufweist, um die erste und zweite Bewegungsgrenze des Betätigungsgeräts (26) und/oder den Regelabstand (D) einzustellen.

10. Werkzeughalterung nach dem vorhergehenden Anspruch, **dadurch gekennzeichnet, dass** die Parametrisierungsmittel auf einem Pult angeordnet sind, das in der Nähe eines Führerstands der motorisierten Maschine angeordnet ist.

11. Werkzeughalterung nach einem der Ansprüche 6 bis 10, **dadurch gekennzeichnet, dass** das Steuersystem (28) ein Alarmsystem aufweist, um einen Fahrer darüber zu informieren, ob eine erste Entfernung, die zwischen der ersten Bewegungsgrenze des Betätigungsgeräts (26) und der ersten Endbegrenzung des Betätigungsgeräts (26) berechnet worden ist, oder eine zweite Entfernung, die zwischen der zweiten Bewegungsgrenze des Betätigungsgeräts (26) und der zweiten Endbegrenzung des Betätigungsgeräts (26) berechnet worden ist, unterhalb wenigstens eines bestimmten Schwellwerts liegt.

## Claims

1. Method for controlling a tool mount (10) provided with a system for avoiding obstacles (20) that are positioned in a row (14), the tool mount comprises:
- a first mount (12) configured to be connected to a motorized device (13) that is able to move along the row (14),
- a second mount (16) supporting a tool (18),
- a link (24) which connects the first and second mounts (12, 16) and which is configured to allow the second mount (16) to move with respect to the first mount (12) in a direction comprising at least one transverse component,
- an actuator (26) configured to control the link (24) and which comprises first and second ends of travel,
- a slaving system (28) configured to command the actuator (26) such that the tool (18) moves from an extended position between the obstacles (20), corresponding to a first limit of the travel of the actuator (26), to a retracted position when passing an obstacle (20), corresponding to a second limit of the travel of the actuator (26);
a point of the tool being positioned with respect to the row (14) at an adjustment distance (D) in the extended position, **characterized in that** the method comprises a step of measuring the deformation of the link (24) at given moments when passing the obstacles (20), a step of comparing the measured values of the deformation of the link (24) when passing two obstacles (20) and a step of carrying out, if necessary and on the basis of this comparison step, a corrective action in order that the adjustment distance (D) is essentially constant.

2. Method according to Claim 1, **characterized in that** the corrective action consists in offsetting the limits of the travel of the actuator (26) proportionally to the difference between the measured values of the deformation of the link (24) when passing two obstacles (20).

3. Method according to Claim 1 or 2, **characterized in that** the slaving system (28) comprises a feeler (68) that is configured to detect the obstacles by pressing against said obstacles (20), and **in that** the step of measuring the deformation of the link (24) is carried out for each obstacle (20) when the feeler (68) loses contact with the obstacle (20).

4. Method according to Claim 3, **characterized in that** it comprises a step of measuring the angular position of the feeler (68), the step of measuring the deformation of the link (24) being carried out when the measured value of the angular position of the feeler (68) reaches a maximum.

5. Method according to one of the preceding claims, **characterized in that** it comprises a step of calculating a distance between each limit of the travel of the actuator (26) with the end of travel of the actuator (26) that is closest and a step of alerting when the calculated distance for at least one limit of the travel of the actuator (26) is below at least one given threshold.

6. Tool mount with which it is possible to carry out the method according to one of the preceding claims, said tool mount comprising:
- a first mount (12) configured to be connected to a motorized device (13) that is able to move along the row (14),
- a second mount (16) supporting a tool (18),
- a link (24) which connects the first and second mounts (12, 16) and which is configured to allow the second mount (16) to move with respect to the first mount (12) in a direction comprising at least one transverse component,
- an actuator (26) configured to control the link (24) and which comprises first and second ends of travel,
- a slaving system (28) configured to command the actuator (26) such that the tool (18) moves from an extended position between the obstacles (20), corresponding to a first limit of the travel of the actuator (26), to a retracted position when passing an obstacle (20), corresponding to a second limit of the travel of the actuator (26);
a point of the tool being able to be positioned with respect to the row (14) at an adjustment distance (D) in the extended position, **characterized in that** the slaving system comprises a sensor (86) configured to measure a value of the deformation of the link (24) at given moments when passing the obstacles (20) and a control system configured to compare two measured values when passing two obstacles and to carry out, if necessary and on the basis of this comparison, a corrective action in order that the adjustment distance (D) is essentially constant.

7. Tool mount according to the preceding claim, **characterized in that** the slaving system (28) comprises a feeler (68) that is configured to pivot while bearing against said obstacles (20), and a sensor (80) that is configured to measure a change in the angular position of the feeler (68) when said feeler (68) pivots while bearing against an obstacle (20).

8. Tool mount according to the preceding claim, **characterized in that** the control system comprises a distributor operating in a proportional manner, the actuator (26) being commanded in a proportional manner on the basis of the measured value of the angular position of the feeler (68).

9. Tool mount according to one of Claims 6 to 8, **characterized in that** the slaving system is of the electrohydraulic type and comprises parametering means for setting the first and second limits of the travel of the actuator (26) and/or the adjustment distance (D).

10. Tool mount according to the preceding claim, **characterized in that** the parametering means are placed on a stand located close to a driving position of the motorised device.

11. Tool mount according to one of Claims 6 to 10, **characterized in that** the slaving system (28) comprises an alert system to inform a driver if a first calculated distance between the first limit of the travel of the actuator (26) and the first end of travel of the actuator (26), or a second calculated distance between the second limit of the travel of the actuator (26) and the second end of travel of the actuator (26), is below at least one given threshold.
